# EUROPEAN PATENT APPLICATION

(11) **EP 4 059 706 A1**
(43) Date of publication of application: **21.09.2022**
(21) Application number: 21163786.3
(22) Date of filing: 19.03.2021
(51) Int. Cl.: B32B 7/12, B32B 15/085, B32B 15/082, B32B 27/08, B32B 27/10, B32B 27/32, B32B 27/30, B32B 29/00

(54) **PACKAGING LAMINATE FOR CONTAINERS**

(71) Applicant: Alternapak Holding B.V., 6546 BB Nijmegen (NL)
(72) Inventor: Menalda, Albert, 6546 BB Nijmegen (NL); Ben-abdelmoumen, Aaladin, 6546 BB Nijmegen (NL)
(74) Representative: De Vries & Metman

(57) **Abstract**

The invention relates to a packaging laminate (1) for containers for liquids, said laminate comprising, a thermoplastic polymer outermost layer (2), a substrate layer (3), a barrier layer (6), a thermoplastic polymer innermost layer (9), and a tie layer (4, 5) between the substrate layer (3) and the barrier layer (6), which tie layer (4, 5) comprises two constituent layers, a first constituent layer (4) facing the substrate and a second constituent layer (5) facing the barrier (6), which second constituent layer (5) comprises an adhesive thermoplastic polymer. The first constituent layer (4) comprises a blend of an adhesive thermoplastic polymer and a supporting thermoplastic polymer having a tensile modulus of 400 MPa or higher.

## Description

The present invention relates to a packaging laminate for containers for liquids, such as milk or juice, and/or solids, such as granulated sugar, said laminate comprising,
a thermoplastic polymer outermost layer,
a substrate layer, typically made from paper or cardboard,
a barrier layer,
a thermoplastic polymer innermost (sealing) layer, and
a tie layer between the substrate layer and the barrier layer, which tie layer comprises two constituent layers, a first constituent layer facing the substrate and a second constituent layer facing the barrier, which second constituent layer comprises, preferably for the greater part or wholly, an adhesive thermoplastic polymer.

WO 98/26994 relates to liquid-tight packaging laminates with improved mechanical strength and flexibility, with an outer layer of a mixture of metallocene-polyethylene and low density polyethylene (LDPE), and mechanically strong liquid-tight packaging containers produced from the packaging laminate. The packaging laminate also has improved friction properties and improved resistance to stress-cracking as a result of fat- or fatty acid-containing substances. The laminate includes a core layer of paper and at least one outer layer including a mixture of metallocene-polyethylene and LDPE. The packaging laminate may also include an additional gas barrier layer and adhesion layer.

EP 1 507 660 relates to a packaging laminate (10) comprising a core layer of paper or carton (11) with a through-going hole, a layer of thermoplastics (12) applied onto one outer side of the core layer, an aluminium foil (13) applied onto the other, inner, side of the core layer and bonded to the core layer by means of an intermediate layer (14) of thermoplastics, the two layers of thermoplastics (12, 14) being sealed to each other within the region of the hole to form a membrane of aluminium foil and thermoplastics, and a first adhesive part-layer (15-1) applied onto the inner side of the aluminium foil, a second intermediate part-layer (15-2) of low density polyethylene (LDPE) applied adjacent to the first adhesive part-layer, and a third innermost part-layer (15-3) comprising in the majority a metallocene-polyethylene (m-PE).

WO 2013/013802 relates to a sheetlike composite (3) comprising a layer configuration with the following layers: 0. optionally a layer of thermoplastic KSu (13); 1. a carrier layer (4); ii. a first layer of thermoplastic KSv (35); iii. a barrier layer (5); iv. a second layer of thermoplastic KSa (6); v. at least one further layer of thermoplastic KSw (7); wherein the Vicat softening temperature of the layer of thermoplastic KSv (35) and the Vicat softening temperature of the layer of thermoplastic KSa (6) is in each case higher than the Vicat softening temperature of the layer of thermoplastic KSw (7).

It is an object of the present invention to provide a laminate for making containers that has improved properties.

To this end, the first constituent layer comprises an adhesive thermoplastic polymer and a supporting thermoplastic polymer having a tensile modulus (as defined in ISO 527) of 400 MPa or higher. In an embodiment, the supporting polymer has a tensile modulus of 500 MPa or higher, preferably 600 MPa or higher, e.g. in a range from 600 to 1500 MPa. In another embodiment, the supporting polymer comprises a polyolefin, preferably a high density polyethylene (HDPE).

Barrier layers are typically as thin as possible and therefore fragile. Forming a container from the laminate, which involves bending and/or folding, and use of the container, including transport and storage, may cause defects, in particular cracks, in the barrier layer, for instance at the bottom corners of the container. It was found that a supporting layer made from a high stiffness polymer and adhered firmly to the substrate and to the adhesive layer between the supporting layer and the barrier significantly reduces formation of cracks in the barrier and/or helps avoiding such cracks altogether, in particular where the barrier is located (relative to the substrate layer) on the inside of bends and folds. It is believed that strain beyond failure is the root cause of the formation of cracks in the barrier layer and that, by firmly adhering the barrier layer to a high stiffness supporting layer, essentially over its entire surface, strain - and thus the formation of cracks - in the barrier layer is counteracted.

Although the laminate according to the present invention must have the layers specified in the independent claim, further layers may be present. For instance, a layer of ink is typically present on the outermost layer or, preferably, between the polymer outermost layer and the substrate layer.

Further, within the framework of the present invention, two or more adjacent layers that are identical are considered to be one layer. This is relevant in that in film coextrusion in a flexible production environment, where different configurations of laminates are made, it often occurs that two channels of the same feedblock are fed from a single extruder (to avoid having to exchange the entire feedblock for a new batch of laminate), consequently forming two identical and adjacent layers.

The tensile module is a property of the polymer before extrusion and defined in ISO 527-1:2019, Plastics - Determination of tensile properties - Part 1: General principles, paragraph 3.9, and measured in accordance with ISO 527-2:2018.

In an embodiment, to further improve adhesion between the constituent layers, the first and second constituent layers both comprise a blend of two or more polymers and the blends have at least one polymer, preferably at least two polymers, e.g. a polyolefin and an adhesive polymer, in common.

In an embodiment, the supporting polymer has a density of 0.93 kg/dm3 or more, preferably a density of 0.95 kg/dm3 or more, e.g. a density in a range from 0.95 to 0.98 kg/dm3.

In an embodiment, the first constituent layer has a weight per unit area of at least 12 g/m2, preferably at least 15 g/m2, e.g. a weight per unit area in a range from 15 to 30 g/m2.

In an embodiment, the adhesive thermoplastic polymer in the first constituent layer is 20 wt% or less, preferably 12 wt% or less, of the total weight of the first constituent layer.

In an embodiment, the second constituent layer facing the barrier has a weight per unit area of 5 g/m2 or less. It preferably contains at least 50 wt% of the total weight of the second constituent layer, preferably at least 80 wt%, preferably in a range from 95 to 100 wt%, adhesive polymer.

These configurations combine, on the one hand, good adhesion between the substrate and the tie layer, between the constituents of the tie layer, and between the tie layer and the barrier layer, and, on the other hand, enable an efficient use of adhesive thermoplastic polymer, which typically is an expensive component (per unit of weight) in the laminate.

In an embodiment, the packaging laminate comprises, between the barrier layer and the innermost layer, a further layer comprising a supporting thermoplastic polymer having a tensile modulus of 400 MPa or higher, preferably a tensile modulus of 500 MPa or higher, preferably 600 MPa or higher, preferably in a range from 600 to 1500 MPa.

The further layer reduces formation of cracks in the barrier and/or helps avoiding such cracks altogether, in particular where the barrier is located (relative to the substrate layer) on the outside of bends and folds.

In an embodiment, the supporting thermoplastic polymer in the further supporting layer has a density and/or weight per unit area as specified with regard to the supporting thermoplastic polymer in the first constituent layer, discussed above.

In an embodiment, the further supporting layer is a blend of different polyolefins, preferably of at least a high density polyethylene (HDPE) and a low density polyethylene (LDPE).

The barrier layer preferably is at least one of aluminium foil, a metal/inorganic oxide thin film, an ethylene vinyl alcohol copolymer layer (EVOH layer), a nylon layer, and a polyvinylidene chloride film.

The substrate layer preferably is made from paper or board. Kraft pulp provides paper having a good strength and low absorptivity. Examples are bleached paper (FBL), non-bleached paper (UBL), duplex paper (DUPLEX) of FBL and UBL, clay coating paper, multi-layer duplex-paper (MB), etc.

The thermoplastic material outermost layer may comprise a polyolefin resin, such as polyethylene, including medium density polyethylene and/or low density polyethylene, a metallocene-polyethylene (m-PE), polypropylene, and ethylene copolymers, and may have a coextruded layer containing an LLDPE that is excellent in its resistance to e.g. oil, acid and infiltration of substances.

The ink on the outermost layer or the outwardly facing surface of the substrate may be a water or oil based ink for flexographic printing, gravure, and/or offset printing.

Examples of suitable adhesive thermoplastic polymers include ethylene vinyl acetate copolymer (EVA) and copolymers of ethylene and acrylic acid or methacrylic acid, i.e. ethylene acrylic acid copolymer (EAA), ethylene methacrylic acid copolymer (EMAA).

The invention further relates to a roll or one or more blanks, also known as sleeves, for the production of containers for a liquid, and to a container holding a liquid, such as milk or juice, and/or a solid, such as granulated sugar, comprising the packaging laminate described above.

The invention will now be explained in more detail with reference to the figures, which schematically show an embodiment according to the present invention.
Figure 1 is a cross-section of a packaging laminate according to the present invention.
Figure 2 schematically show a process of manufacturing the laminate shown in Figure 1.

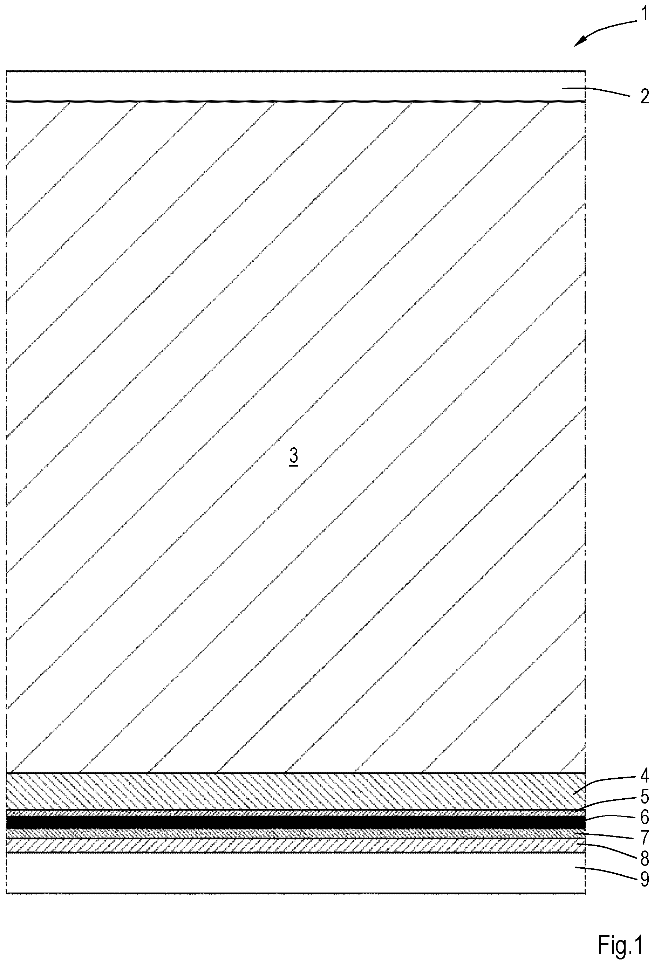

Figure 1 is a cross-section of a packaging laminate comprising:

| Table 1 | Packaging laminate (1) | g/m2 |
|---|---|---|
| | | |
| Outermost layer (2) | LDPE Ineos 19N430 | 15 |
| | | |
| Substrate (3) | Board | 245 |
| | | |
| Tie, adhesive and supporting layer (4) | 50 wt% HDPE Ineos Rigidex^{®} HD6070FA | 18 |
| | 40 wt% LDPE Dow^{™} PT 7007 | |
| | 10 wt% EMAA Ineos M21N430 | |
| | | |
| Tie, adhesive layer (5) | 30 wt% LDPE Dow^{™} PT 7007 | 3 |
| | 70 wt% EMAA Ineos M21N430 | |
| | | |
| Barrier (6) | Aluminum foil | 17 |
| | | |
| Tie, adhesive layer (7) | Escor 6000 Exxon | 5 |
| | | |
| Further supporting layer (8) | 50 wt% HDPE Ineos Rigidex^{®} HD6070FA | 7 |
| | 50 wt% LDPE Dow^{™} PT 7007 | |
| | | |
| Innermost layer (9) | 70 wt% LDPE Dow^{™} PT 7007 | 20 |
| | 30 wt% m-LLDPE Eltex^{®} PF1315AZ | |

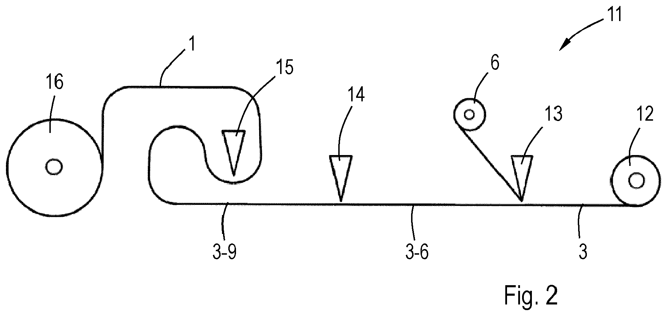

Figure 2 schematically shows a process of manufacturing the laminate shown in Figure 1. Virgin board 3 is fed to a laminator 11 from a roll 12. A first die 13 coextrudes the adhesive and supporting layer 4 and the adhesive layer 5. The barrier layer 6, aluminium foil, is applied at the same station. Next, a second die 14 coextrudes the inner layers, viz. the adhesive layer 7, the further supporting layer 8, and innermost or sealing layer 9, onto the barrier layer 6. Finally, the laminate is reversed, a third die 15 extrudes the outermost layer 2 onto the board 3, and the finished laminated is wound on a roll 16.

The invention is not restricted to the above-described embodiments, which can be varied in a number of ways within the scope of the claims.

## Claims

1. A packaging laminate (1) for containers, said laminate comprising,
a thermoplastic polymer outermost layer (2),
a substrate layer (3),
a barrier layer (6),
a thermoplastic polymer innermost layer (9), and
a tie layer (4, 5) between the substrate layer (3) and the barrier layer (6), which tie layer (4, 5) comprises two constituent layers, a first constituent layer (4) facing the substrate and a second constituent layer (5) facing the barrier (6), which second constituent layer (5) comprises an adhesive thermoplastic polymer,
**characterised in that** the first constituent layer (4) comprises an adhesive thermoplastic polymer and a supporting thermoplastic polymer having a tensile modulus of 400 MPa or higher.

2. The packaging laminate of claim 1, wherein the supporting polymer has a tensile modulus of 500 MPa or higher, preferably 600 MPa or higher.

3. The packaging laminate of claim 1 or 2, wherein the supporting polymer comprises a polyolefin, preferably a high density polyethylene (HDPE).

4. The packaging laminate of any one of the preceding claims, wherein the first constituent layer (4) facing the substrate and the second constituent layer (5) facing the barrier (6) both comprise a blend of two or more polymers and wherein the blends have at least one polymer in common.

5. The packaging laminate of any one of the preceding claims, wherein the supporting polymer has a density of 0.90 kg/dm3 or more, preferably a density of 0.95 kg/dm3 or more, e.g. has a density in a range from 0.95 to 0.98 kg/dm3.

6. The packaging laminate of any one of the preceding claims, wherein the first constituent layer (4) has a weight per unit area of at least 12 g/m2, preferably at least 15 g/m2.

7. The packaging laminate of any one of the preceding claims, wherein the adhesive thermoplastic polymer in the first constituent layer (4) is 20 wt% or less, preferably 12 wt% or less, of the total weight of the first constituent layer.

8. The packaging laminate of any one of the pre-ceding claims, wherein second constituent layer (5) facing the barrier (6) has a weight per unit area of 5 g/m2 or less.

9. The packaging laminate of any one of the preceding claims, comprising, between the barrier layer (6) and the innermost layer (9), a further layer (8) comprising a supporting thermoplastic polymer having a tensile modulus of 400 MPa or higher, preferably a tensile modulus of 500 MPa or higher, preferably 600 Mpa or higher.

10. The packaging laminate according to claim 9, wherein the further supporting layer (8) is a polymer and/or has a density and/or weight per unit area as specified in claims 3, 5, and 6.

11. The packaging laminate according to claim 9 or 10, the further supporting layer (8) is a blend of polyolefins, preferably of at least a high density polyethylene (HDPE) and a low density polyethylene (LDPE) .

12. The packaging laminate of any one of the preceding claims, wherein the barrier layer (6) is at least one of aluminium foil, a metal/inorganic oxide thin film, an ethylene vinyl alcohol copolymer layer (EVOH layer), a nylon layer, a polyvinylidene chloride film.

13. The packaging laminate of any one of the preceding claims, wherein substrate layer is made from paper or board.

14. Roll (16) or one or more blanks, also known as sleeves, for the production of containers for a liquid, such as milk or juice, which rolls or blanks are made from the packaging laminate of any one of the preceding claims.

15. Container holding a liquid, such as milk or juice, and/or a solid, such as granulated sugar, made from the packaging laminate of any one of the preceding claims.
